## Europäisches Patentamt
## European Patent Office
## Office européen des brevets

(11) Veröffentlichungsnummer: **0 011 780**
**B1**

(12) **EUROPÄISCHE PATENTSCHRIFT**

(45) Veröffentlichungstag der Patentschrift: **29.04.81**

(51) Int. Cl.³: **B 65 D 51/00**

(21) Anmeldenummer: **79104515.6**

(22) Anmeldetag: **15.11.79**

(54) Verschlussdeckel für Kraftstofftankstutzen von Kraftfahrzeugen.

(30) Priorität: **04.12.78 DE 2852454**

(43) Veröffentlichungstag der Anmeldung:
**11.06.80 Patentblatt 80/12**

(45) Bekanntmachung des Hinweises auf die Patenterteilung:
**29.04.81 Patentblatt 81/17**

(84) Benannte Vertragsstaaten:
**AT BE DE FR GB IT SE**

(56) Entgegenhaltungen:
**DE - A - 2 657 747**

(73) Patentinhaber: **Blau KG Fabrik für Kraftfahrzeugteile Schneiderstrasse 13-17 Postfach 2024 D-4018 Langenfeld (DE)**

(72) Erfinder: **Gerdes, Theodor Tilman-Riemenschneider-Weg 6 D-4018 Langenfeld (DE)**

(74) Vertreter: **Schaumburg, Karl-Heinz et al, Patentanwälte Schaumburg, Schulz-Dörlam & Thoenes Mauerkircherstrasse 31 D-8000 München 80 (DE)**

Courier Press, Leamington Spa, England.

### Verschlußdeckel für Kraftstofftankstutzen von Kraftfahrzeugen

Die Erfindung bezieht sich auf einen Verschlußdeckel für Kraftstofftankstutzen von Kraftfahrzeugen, mit einer Außenkappe und einem darin drehfest gehaltenen Innendeckelteil, wobei der Innendeckelteil topfartig geformt ist, auf seiner der Außenkappe zugewandten Seite einen umlaufenden Flansch aufweist, Dichtungsmittel zur Abdichtung gegenüber dem Stutzen trägt und Verbindungsmittel zur Befestigung in dem Stutzen umfaßt, wobei die Außenkappe auf ihrer dem Innendeckelteil zugewandten Rückseite einen einstückig angeformten, aus "Kunststoff bestehenden, hohlzylindrischen, an seinem dem Innendeckelteil zugewandten Ende offenen Wandungsteil umfaßt, der an seinem offenen Ende mindestens einen radial gerichteten Fortsatz zur Verbindung mit dem Innendeckelteil aufweist, und wobei die Außenkappe vom Innendeckelteil bei \uf die Außenkappe im Falle eines Kraftfahreugunfalls einwirkenden Kräften absprengbar ist.

Ein derartiger Verschlußdeckel ist bekannt aus der deutschen Offenlegungschrifft 26 57 747 (Volkswagenwerk AG). Hierbei trägt der hohlzylindrische Wandungsteil der Außenkappe einen ringförmig umlaufenden Fortsatz oder mehrere in Umfangsrichtung beabstandete Fortsätze, die radial nach außen gerichtet sind, und am Innendeckelteil ist ein aus Metallblech gebildeter Ring vorgesehen, der zur Außenkappe hin und daran anschließend radial einwärts im Querschnitt U-förmig umgebördelt ist und in, dessen radial nach innen offenen, umgebördelten Rand der Fortsatz oder die Fortsätze der hohlzylindrischen Wandung zur Verbindung von Außenkappe und Innendeckelteil eingreifen. Damit die Außenkappe bei Kraftfahrzeugunfällen abgesprengt werden kann, ohne daß dabei der dichte Sitz des Innendeckelteils auf dem Kraftstofftankstutzen aufgehoben wird, bestehen die Außenkappe zumindest teilweise und jedenfalls deren hohlzylindrischer Wandungsteil und der Fortsatz oder die Fortsätze aus einem schwach elastischen Kunststoff, so daß der Fortsatz oder die Fortsätze aus dem umgebördelten Rand des Ringes des Innendeckelteils ausrasten können. Ein solches Ausrasten bei auf die Außenkappe einwirkenden, extrem großen Kräften soll jedoch bei betriebsmäßig auftretenden Kräften ausgeschlossen sein, vielmehr muß beim üblichen Gebrauch des Deckels die Verbindung zwischen Außenkappe und Innendeckelteil nicht nur genügend fest sein, um eine Trennung beider Teile zu verhindern, sondern der Fortsatz oder die Fortsätze müssen in dem umgebördelten Rand des Ringes des Innendeckelteils auch so fest gehalten sein, daß sich eine durch Reibschluß genügend drehfeste Verbindung ergibt. Dies erfordert, daß der hohlzylindrische Wandungsteil mit dem Fortsatz oder den Fortsätzen unter starker radialer Vorspannung in dem umgebördelten Rand gehalten ist und daß der hohlzylindrische Wandungsteil und der Fortsatz oder die Fortsätze von so hoher Festigkeit sind, daß bei der Montage und bei den betriebsmäßig auftretenden Kräften ebenso wie bei den bei einem Kraftfahrzeugunfall auftretenden, extrem großen Kräften keine Zerstörung erfolgt, Diese Teile müssen daher aus einem sehr hochwertigen, zähelastischen, festen Kunststoff hergestellt werden. Die Notwendigkeit der Verwendung eines derartigen hochwertigen Kunststoffes bedeutet einen entsprachenden Aufwand hinsichtlich der Kosten des Kunststoffmaterials wie auch hinsichtlich einer erschwerten Verarbeitung. Weiter kann die starke radiale Verspannung der hohlzylindrische Wandung der Außenkappe zu einer Materialermüdung des Kunststoffes führen, wodurch nach längerer Gebrauchslebensdauer eine sichere Verbindung zwischen Außenkappe und Innendeckelteil gegen ein Absprengen der Außenkappe und gegen eine Verdrehung zwischen Außenkappe und Innendeckelteil nicht mehr gewährleistet ist.

Der Erfindung liegt die Aufgabe zugrunde, einen Verschlußdeckel der eingangs genannten Art in unaufwendiger Weise so weiterzubilden, daß bei betriebsmäßig auftretenden Kräften eine sichere Verbindung zwischen Außenkappe und Innendeckelteil gewährleistet ist und trotzdem beim Auftreten extrem großer Kräfte bei Kraftfahrzeugunfällen eine Absprengung der Außenkappe möglich ist, ohne daß dadurch der dichte Sitz des Innendeckelteils im Stutzen beeinträchtigt würde.

Die Aufgabe wird gemäß der Erfindung bei einem Verschlußdeckel der eingangs genannten Art dadurch gelöst, daß die Festigkeit des radialen Fortsatzes so gering bemessen ist, daß er unter der Wirkung der bei einem Kraftfahrzeugunfall auf die Außenkappe wirkenden Kräfte abbricht, und daß zur drehfesten Verbindung zwischen Außenkappe und Innendeckelteil formschlüssige Kupplungsmittel vorgesehen sind.

Bei dem Verschlußdeckel gemäß der Erfindung bildet der Fortsatz des hohlzylindrischen Wandungsteils ein Sollbruchstelle, an der bei der Einwirkung extrem großer Kräfte auf die Außenkappe deren Trennung vom Innendeckelteil erfolgt. Da der Fortsatz nur eine relativ geringe Festigkeit aufweist, kann zur Herstellung der Außenkappe, soweit sie aus Kunststoff besteht, ein nicht allzu hochwertiger Kunststoff mit relativ geringer Festigkeit verwendet werden, der sich auch leicht verarbeiten läßt, oder es kann bei Verwendung eines hochwertigen Kunststoffes eine relativ geringe Materialdicke im Bereich des hohlzylindrischen Wandungsteils und des Fortsatzes gewählt werden, wodurch sich ein geringerer Herstellungsaufwand ergibt, Da zur drehfesten Verbindung zwischen Außenkappe und Innendeckelteil gesonderte formschlüssige Kupplungsmittel vorgesehen sind, braucht der Fortsatz am Innendeckelteil nicht unter einer radialen Vorspannung zur Erzielung eines Reibschlusses gehalten zu sein, so daß auch insofern eine nur geringe Festigkeit des hohlzylindrischen Wandungsteils und des Fortsatzes erforderlich ist und eine Materialermüdung dieser Teile ausgeschlossen ist.

Die Erfindung wird im folgenden anhand der Zeichnungen näher erläutert, in denen Ausführungsbeispiele dargestellt sind. Es zeigt:

Fig. 1 ein erstes Ausführungsbeispiel eines Verschlußdeckels gemäß der Erfindung im Längsschnitt;

Fig. 2 einen Schnitt durch den Verschlußdeckel gemäß Figur 1 entlang der Linie II—II;

Fig. 3 ein zweites Ausführungsbeispiel eines Verschlußdeckels gemäß der Erfindung im Längsschnitt;

Fig. 4 einen Schnitt durch den Verschlußdeckel gemäß Figur 3 entlang der Linie IV—IV.

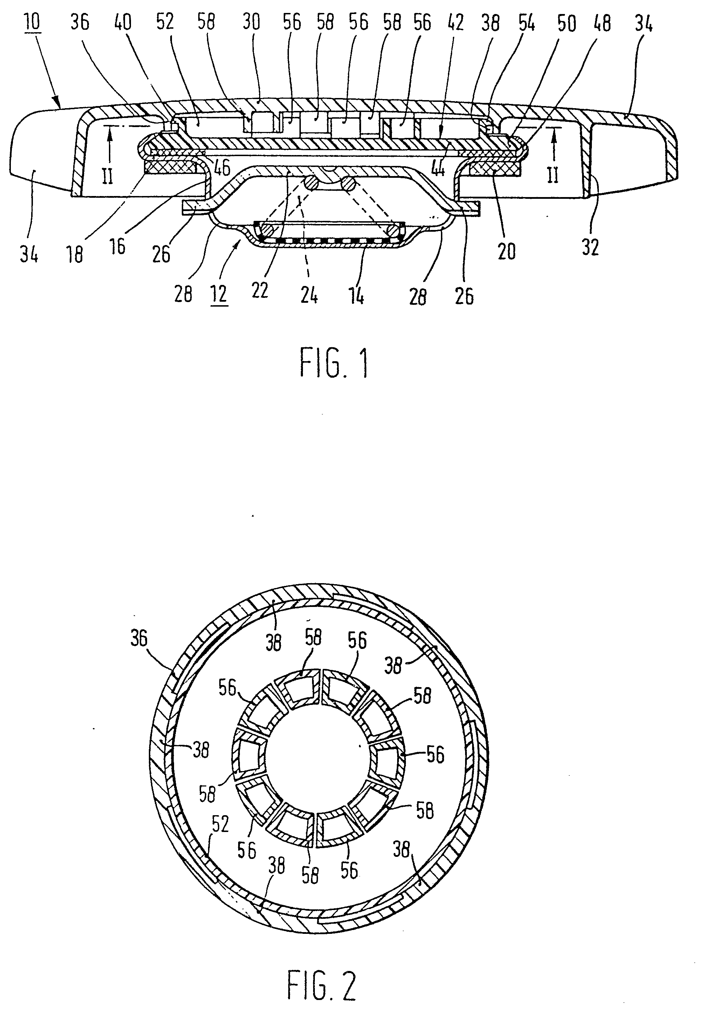

Der in Fig. 1 und 2 gezeigte Verschlußdeckel umfaßt eine Außenkappe 10 und einen darin drehfest gehaltenen Innendeckelteil 12. Der Innendeckelteil 12 ist topfartig ausgebildet und umfaßt einen an seinem rückwärtigen, der Außenkappe 10 abgewandten Ende liegenden Boden 14, eine daran anschließenden, annähernd zylindrischen Wandungsabschnitt 16 sowie einen sich daran an der der Außenkappe 10 zugewandten Seite anschließenden, radial nach außen vorspringenden, umlaufenden Flansch 18, die aus Metallblech hergestellt sind. Auf der Rückseite des Flanches 18 liegt eine Dichtungsring 20 zur Abdichtung gegenüber einem nicht dargestellten Kraftstofftankstutzen. Im Innenraum des Innendeckelteils 12 innerhalb des Wandungssabschnitts 16 liegt eine Bajonettbrücke 22, die mittels einer zwischen ihr und dem Boden 14 eingespannten Schraubendruckfeder 24 in Richtung auf die Außenkappe 10 vorgespannt ist und die mit ihren freien Enden 26 durch in der Wandung des Innendeckelteils 12 vorgesehenen Öffnungen 28 hindurch radial nach außen ragt, um im Zusammenwirken mit am Stutzeninnenrand vorgesehenen, nicht dargestellten Kurvenführungen eine Befestigung im Stutzen zu ermöglichen.

Die Außenkappe 10 besteht aus einem nicht allzu hochwertigem Kunststoff, dessen Festigkeit zur Aufnahme der beim Gebrauch von Hand auf sie ausgeübten Kräfte ausreicht. Sie umfaßt einen schwach nach außen gewölbten mittleren Wandungsteil 30, einen sich konzentrisch zum Flansch 18 und in Abstand von diesem nach hinten über die Ebene des Flansches 18 hinaus erstreckenden Rand 32 sowie radiale Fortsätze 34, zwischen denen Zwischenräume zum Eingriff von Hand und zum Drehen des Deckels zwischen einer Verschluß- und einer Öffnungsstellung liegen. Weiter umfaßt die Außenkappe 10 einen auf der dem Innendeckelteil zugewandten Rückseite des mittleren Wandungsteils 30 einstückig angeformten, somit ebenfalls aus Kunststoff bestehenden, hohlzylindrischen, an seinem dem Innendeckelteil zugewandten freien Ende offenen Wandungsteil 36, dessen radiale Wandungsdicke gering ist gegenüber den Wandungsdicken des mittleren Wandungsteils 30 des Randes 32 und der Fortsätze 34. Der hohlzylindrische Wandungsteil 36 trägt an seinem offenen Ende mehrere in Umfangsrichtung voneinander beabstandete, radial einwärts ragende Fortsätze 38, deren radiale und axiale Querschnittsabmessungen gering sind gegenüber den Wanddicken des mittleren Wandungsteils 30, des Rands 32 und der Fortsätze 34 und die auf ihrer dem mittleren Wandungsteil 30 zugewandten Oberseite jeweils eine kreisringabschnittförmige Auflagefläche 40 bilden in einer zur Achse der Außenkappe 10 senkrechten Ebene liegt.

Auf seiner der Außenkappe 10 zugewandten Seite weist der Innendeckelteil 12 einen aus Kunststoff bestehenden Formteil 42 auf. Dieser umfaßt einen kreisplattenförmigen Wandungsteil 44, dessen Außendurchmesser demjenigen des Flansches 18 gleicht und der über einen zwischengelegten Dichtungsring 46 am Flansch 18 anliegt. Zur axialen sowie drehfesten Halterung des Formteils 42 am Flansch 18 ist dessen Rand 48 zur Außenkappe 10 und daran anschließend radial einwärts im Querschnitt U-förmig umgebördelt, so daß er auf dem zur Außenkappe 10 hin abgeschrägten Außenrand 50 des Wandungsteils 44 fest aufliegt, sowie in nicht näher dargestellter Weise in am Außenrand 50 vorgesehene Ausnehmungen formschlüssig eingreift. Der Formteil 42 umfaßt weiter einen in den Innenraum des offenen Wandungsteils 36 hineinragenden, einstückig mit dem Wandungsteil 44 verbundenen Abschnitt 52 und einen an dessen freiem Ende radial auswärts ragenden, umlaufenden, Flanschrand 54, der die Fortsätze 38 hintergreift. Der Flanschrand 54 ist auf seiner der Außenkappe 10 zugewandten Seite abgeschrägt, um die Montage des Formteils 42 in der Außenkappe 10 zu erleichtern, während seine Rückseite kreisringförmig und eben ist, so daß sie an den Anlageflächen 40 der Fortsätze 38 anliegt. Obwohl die axialen und radialen Abmessungen des Flanschrandes 54 gleich denjenigen der Fortsätze 38 sind, weist der Flanschrand 54 gegenüber letzteren eine größere Festigkeit auf, da er in Umfangsrichtung durchgehend verläuft, so daß eine Trennung der Außenkappe 10 vom Innendeckelteil 12 nur dadurch möglich ist, daß die aufgrund der Materialwahl und ihrer Abmessungen eine relativ geringe Festigkeit aufweisenden Fortsätze 38 abbrechen.

Der Außenradius des Abschnitts 52 des Formteils 42 gleicht im nicht montiertem Zustand des Formteils 42 dem Innenradius der Fortsätze 38. Der Außendurchmesser des Flanschrands 54 gleicht im nicht montiertem Zustand des Formteils 42 dem Innendurchmesser des offenen Wandungsteils 36. Nach der Montage des Formteils 42 in der Außenkappe 10 belasten daher der Abschnitt 52 und der Flanschrand 54 die Fortsätze 36 und den offenen Wandungsteil 36 nicht im Sinne einer radialen Verspannung. Damit auch bei der Montage des Formteils 42 der Flanschrand 54 hinter den Fortsätzen 38 verrastet werden kann, ohne daß beim hierbei erforderlichen radialen Nachgeben des offenen Wandungsteils 36 und/oder des Abschnitts 52 die Fortsätze 38 abbrechen, sind die radialen Abmessungen des Flanschrandes 54 und der Fortsätze 38 nur sehr gering gegenüber dem Außendurchmesser des Flanches 18.

Der Abschnitt 52 des Formteils 42 ist hohlzylindrisch ausgebildet. Auf dem Wandungsteil 44 des Formteils 42 sind im Innenraum dieses hohlzylindrischen Abschnitts 52 mehrere in Umfangsrichtung voneinander beabstandete, sich annähernd bis zur Rückseite des mittleren Wandungsteils 30 der Außenkappe 10 erstreckende Nocke 56 vorgesehen, die einstückig mit dem Wandungsteil 44 gebildet sind. Ihre radial inneren und äußeren Flächen liegen auf konzentrischen Kreisen, während ihre einander zugewandten, in Umfangsrichtung weisenden Flanken genau radial verlaufen. Weiter ist auf der Rückseite des mittleren Wandungsteils 30 der Außenkappe 10 eine gleiche Anzahl von sich annähernd bis zu dem Wandungsteil 44 des Formteils 42 erstreckenden Nocken 58 vorgesehen, die mit ihrem Querschnitt in Umfangsrichtung jeweils den Zwischenraum zwischen zwei benachbarten Nocken 56 des Formteils 42 ausfüllen; wie aus Figur 2 ersichtlich, sind Innenradius und Außenradius der Nocken 58 mit denjenigen der Nocken 56 übereinstimmend, während die in Umfangsrichtung weisenden, einander zugekehrten Flanken der Nocken 58 ebenfalls genau radial verlaufen, so daß jeweils eine Flanke einer Nocke 56 an der Flanke der benachbarten Nocke 58 anliegt. Hiermit ist eine drehfeste, formschlüssige Verbindung zwischen Außenkappe 10 und Innendeckelteil 12 geschaffen, ohne daß zwischen den Fortsätzen 38 und dem Abschnitt 52 oder dessen Flanschrand 54 eine reibschlüssige Verbindung vorläge.

Abweichend vom dargestellten Ausführungsbeispiel könnte der Innendeckelteil 12 als Verbindungsmittel auch geschlossen ausgebildet sein und als Verbindungsmittel im Bereich seines Wandungsabschnitts 16 ein Außengewinde aufweisen. In diesem Fall könnte der Dichtring 46 entfallen. Ist als Verbindungsmittel jedoch wie beim Ausführungsbeispiel die Brücke 22 vorgesehen, die das Vorhandensein der Öffnungen 28 bedingt, so kann Kraftstoff in den Innenraum des Innendeckelteils 12 eintreten. Damit dieser nicht zur Außenkappe 10 hin austreten kann, muß der Innendeckelteil 12 zu dieser hin Flüssigkeitsdicht abgeschlossen sein. Dies erfolgt mittels des Formteils 42, des Dichtungsrings 46 und der beschriebenen Halterung des Formteils 42 im Rand 48 des Flanches 18.

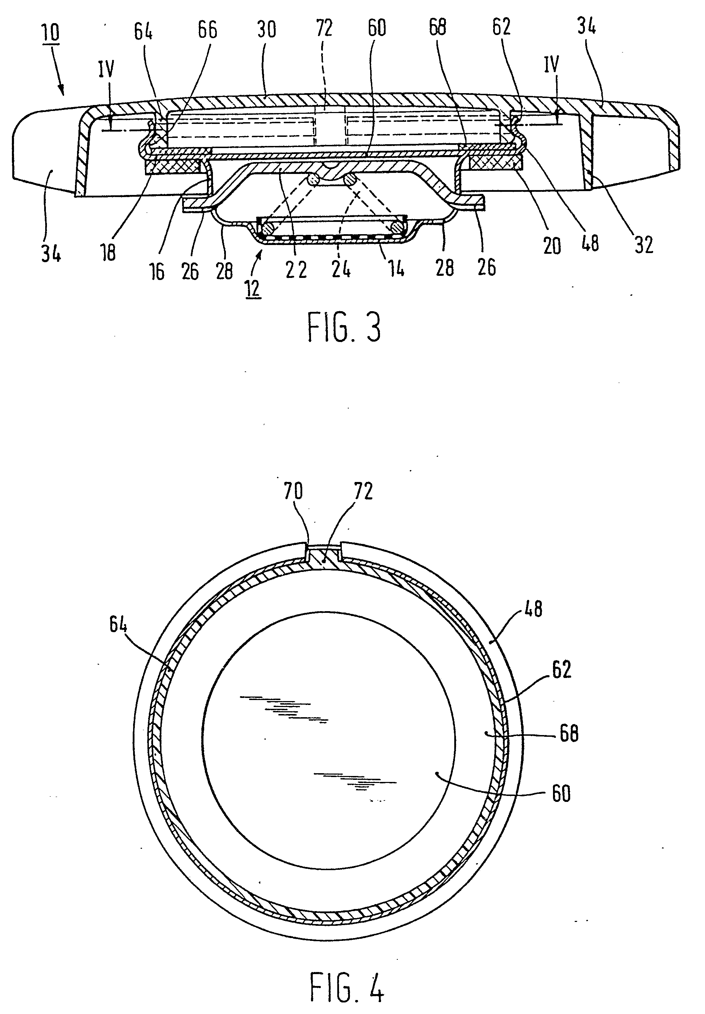

Bei dem in Fig. 3 und 4 dargestellten Ausführungsbeispiel sind gegenüber Fig. 1 und 2 gleiche oder gleichartige Teile mit gleichen Bezugszeichen bezeichnet. So ist der innendeckelteil 12 topfartig mit einem Flansch 18 ausgebildet. Jedoch ist er in Höhe des Flanches mittels eines Wandungsteils 60 zur Außenkappe 10 hin flüssigkeitsdicht verschlossen. Weiter ist der Rand 48 des Flansches zur Außenkappe 10 hin und daran anschließend radial einwärts im Querschnitt U-förmig umgebördelt, jedoch schließt sich an den radial einwärts gerichteten Schenkel noch ein sich axial zum mittleren Wandungsteil 30 der Außenkappe 10 hin erstreckender, an seinem freien Ende leicht aufgeweiteter Ring 62 an. Dabei dient der Rand 48 beim Ausführungsbeispiel gemäß Fig. 3 und 4 unmittelbar zur Halterung der Außenkappe 10. Der in diesem Fall an der Rückseite der Außenkappe 19 vorgesehene, hohlzylindrische Wandungsteil 64 hat einen Außendurchmesser, der bei nicht montiertem Innenteil 12 dem Innendurchmesser des Ringes 62 des Flanschrands 48 gleicht, so daß im montiertem Zustand der Ring 62 am Außenumfang des hohlzylindrischen Wandungsteils 64 ohne radiale Verspannung anleigt. An seinem offenen Ende trägt der hohlzylindrische Wandungsteil 64 einem umlaufenden, in diesem Fall radial nach außen gerichteten Fortsatz 66, der in den umgebördelten Rand 48 eingreift. Zwischen dem rückwärtigen freien Ende des hohlzylindrischen Wandungsteils 64 und dem Flansch 18 liegt ein elastischer Ring 68, der eine axiale Bewegung des Fortsatzes 66 innerhalb des Randes 48 weitest gehend unmöglich macht. Der ring 68 übt zwar eine geringe axiale Kraft auf den Fortsatz 66 in Richtung auf den umgebördelten Schenkel des Randes 48 aus, jedoch ist die hierdurch resultierende Radialkraft auf den hohlzylindrischen Wandungsteil 64 nur sehr gering. Ein Absprengen der Außenkappe 10 vom Innendeckelteil 12 kann daher wiederum nur dadurch erfolgen, daß der Fortsatz 66 auf einem genügend großem Umfangsbereich abbricht.

Zur formschlüssigen, drehfesten Kupplung zwischen Außenkappe 10 und Innendeckelteil 12 weist er umgebördelte Rand 48 einschließlich seines Rings 62 eine ausgeschnittene Ausnehmung 70 von gegenüber der Umfangslänge geringerer Breite auf, und der hohlzylindrische Wandungsteil 64 trägt eine radial auswärts in diese Ausnehmung 70 hineinragende Nocke 72. Der den Rand 48 in axialer Richtung verlängernde Ring 62 bewirkt eine Vergrößerung der Anlageflächen, die zwischen dem Rand 48 und der Nocke 72 in Umfangsrichtung wirksam sind.

## Patentansprüche

1. Verschlußdeckel für Kraftstofftankstutzen von Kraftfahrzeugen, mit einer Außenkappe (10) und einem darin drehfest gehaltenen Innendeckelteil (12), wobei der Innendeckelteil (12) topfartig geformt ist, auf seiner der Außenkappe (10) zugewandten Seite einen umlaufenden Flansch (18) aufweist, Dichtungsmittel zur Abdichtung gegenüber dem Stutzen trägt und Verbindungsmittel (22) zur Befestigung in dem Stutzen umfaßt, wobei die Außenkappe (10) auf ihrer dem Innendeckelteil (12) zugewandten Rückseite einen einstückig angeformten, aus Kunststoff bestehenden, hohlzylindrischen, an seinem dem Innendeckelteil (12) zugewandten Ende offenen Wandungsteil (36;64) umfaßt, der an seinem offenen Ende mindestens einen radial gerichteten Fortsatz (38;66) zur Verbindung mit dem Innendeckelteil (12) aufweist, und wobei die Außenkappe (10) vom Innendeckelteil (12) bei auf die Außenkappe (10) im Falle eines Kraftfahrzeugunfalls einwirkenden Kräften absprengbar ist, dadurch gekennzeichnet, daß die Festigkeit des Fortsatzes (38;66) so gering bemessen ist, daß er unter der Wirkung der bei einem Kraftfahrzeugunfall auf die Außenkappe (10) wirkenden Kräfte abbricht, und daß zur drehfesten Verbindung zwischen Außenkappe (10) und Innendeckelteil (12) formschlüssige Kupplungsmittel (56,58;70,72) vorgesehen sind.

2. Verschlußdeckel nach Anspruch 1, dadurch gekennzeichnet, daß der Innendeckelteil (12) auf seiner der Außenkappe (10) zugewandten Seite einen einen annähernd ebenen Wandungsteil (44) aufweisenden Formteil (42) umfaßt, daß der Formteil (42) einen in den Innenraum des hohlzylindrischen Wandungsabschnitts (36) der Außenkappe (10) hineinragenden Abschnitt (52) und einen an dessen freiem Ende radial auswärts ragenden Flanschrand (54) umfaßt, der die radial einwärts ragenden, in Umfangsrichtung voneinander beabstandeten Fortsätze (38) hintergreift, und daß die aneinander anliegenden Flächen (40) der Fortsätze (38) und des Flanschrandes (54) in einer zur Achse der Außenkappe (10) senkrechten Ebene liegen.

3. Verschlußdeckel nach Anspruch 2, dadurch gekennzeichnet, daß der in den Innenraum der hohlzylindrischen Wandung (36) der Außenkappe (10) hineinragende Abschnitt (52) des Formteils (42) hohlzylindrisch ausgebildet ist, daß auf dem ebenen Wandungsteil (44) des Formteils (42) im Innenraum dieses hohlzylindrischen Abschnitts (52) mehrere in Umfangsrichtung beabstandete, sich annähernd bis zur Außenkappe (10) erstreckende Nocken (56) vorgesehen sind, deren einander zugewandte Flanken radial verlaufen, und daß auf der Rückseite der Außenkappe (10) mehrere sich annähernd bis zu dem ebenen Wandungsteil (44) des Formteils (42) erstreckende Nocken (58) vorgesehen sind, die jeweils den Zwischenraum zwischen zwei benachbarten Nocken (56) des Formteils (42) in Umfangsrichtung ausfüllen.

4. Verschlußdeckel nach Anspruch 2 oder 3, dadurch gekennzeichnet, daß als Verbindungsmittel eine Bajonettbrücke (22) vorgesehen ist, die im Innendeckelteil (12) liegt, federelastisch auf die Außenkappe (10) hin vorgespannt ist und mit ihren freien Enden (26) durch in der Wandung (14,16) des Innendeckelteils (12) vorgesehene Öffnungen (28) hindurch radial nach außen ragt, und daß der Formteil (42) den Innenraum des Innendeckelteils (12) zur Außenkappe (10) hin flüssigkeitsdicht verschließt.

5. Verschlußdeckel nach einem der Ansprüche 2 bis 4, dadurch gekennzeichnet, daß der aus Metallblech bestehende Flansch (18) des Innendeckelteils (12) an seinem Außenrand (48) zur Außenkappe (10), hin und daran anschließend radial einwärts im Querschnitt U-förmig umgebördelt ist und daß der Formteil (42) an seinem der Außenkappe (10) abgewandten hinteren Ende einen umlaufenden, radial auswärts gerichteten Rand (50) von gegenüber den Fortsätzen (38) größerer Festigkeit aufweist, mit dem er in dem Umgebördelten Rand (48) des Flansches (18) gehalten ist.

6. Verschlußdeckel nach Anspruch 1, dadurch gekennzeichnet, daß der Flansch (18) des aus Metallblech geformten Innendeckelteils (12) an seinem Außenrand (48) zur Außenkappe (10) hin und daran anschließend radial einwärts im Querschnitt U-förmig umgebördelt ist, daß der Außendurchmesser des hohlzylindrischen Wandungsteils (64) dem Innendurchmesser des umgebördelten Außenrands (48) gleicht, daß der den hohlzylindrischen Wandungsteil (64) auf dem überwiegenden Teil seines Umfangs umgebende, nach außen gerichtete Fortsatz (66) in den umgebördelten Außenrand (48) eingreift, daß der umgebrödelte Außenrand (48) eine ausgeschnittene Ausnehmung (70) von gegenüber der Umfangslänge geringer Breite aufweist und daß der hohlzylindrische Wandungsteil (64) der Außenkappe (10) auf seinem Außenumfang eine radial auswärts in diese Ausnehmung (70) hineinragende Nocke (72) trägt.

## Revendications

1. Bouchon de fermeture de turbulures de réservoirs de carburant pour véhicules automobiles, comportant un capuchon extérieur (10) et une partie (12) formant couvercle intérieur et fixée dans ledit capuchon d'une façon empêchant sa rotation relative; ladite partie (12) avant reçu une forme en cuvette, présentant sur son côté orienté en direction du capuchon extérieur (10) une collerette (18) qui en fait tout le tour, portant des moyens destinés à assurer l'étanchéïté par rapport à la tubulure et comportant des moyens de liaison (22) destinés à assurer sa fixation dans la tubulure; le capuchon extérieur (10) comportant, sur sa face postérieure tournée vers la pièce (12) formant couvercle intérieur, une partie (36, 64) en matière synthétique réalisée de façon à ne constituer avec lui qu'une seule pièce et formant une paroi en forme de cylindre creux ouvert sur son côté tourné vers ladite pièce (12), laquelle partie (36,64) est munie sur son extrémité ouverte d'au moins un appendice (38,66), dirigé radialement, destiné à assurer la liaison avec ladite pièce (12); et le capuchon extérieur (10) pouvant sauter en se séparant de ladite pièce (12) formant couvercle intérieur lorsque, en cas d'accident au véhicule automobile, des forces agissent sur la capuchon extérieur (10); lequel bouchon de fermeture est caractérisé en ce que la résistance de l'appendice (38,66) est choisie suffisamment faible pour qu'il se rompe sous l'effet des forces agissant sur la capuchon extérieur (10) en cas d'accident survenu au véhicule automobile et en ce qu'il est prévu, entre la capuchon extérieur (10) et la pièce (12) formant couvercle intérieur, des moyens d'accouplement (56,58;70,72) de formes complémentaires destinés à assurer entre ces pièces, par la forme même de celle-ci, une liaison empêchant toute rotation.

2. Bouchon de réservoir selon la revendication 1, caractérisé en ce que la pièce (12) formant couvercle intérieur comporte, sur son côté tourné vers la capuchon intérieur (10), une pièce de forme (42) présentant une partie (44) constituant une paroi approximativement plane; en ce que cette pièce (42) comporte une portion (52) en saillie, pénétrant dans l'espace intérieur de la partie (36) du capuchon extérieur (10) qui forme la paroi en forme de cylindre creux, et un rebord (54) formant collerette qui dépasse radialement, vers l'extérieur, de l'extrémité libre de cette portion (52) et qui vient s'accrocher derrière les appendices (38) faisant saillie radialement vers l'intérieur et disposés à une certaine distance l'un de l'autre suivant la direction périphérique; et en ce que les surfaces (40) adjacentes des appendices (38) et du rebord (54) se trouvent dans un plan perpendiculaire à l'axe du capuchon extérieur (10).

3. Bouchon de réservoir selon la revendication 2, caractérisé en ce que la portion (52) de la pièce de forme (42), portion qui fait saillie dans l'espace intérieur de la paroi (36) en forme de cylindre creux de capuchon extérieur (10), a la forme d'un cylindre creux; en ce que, sur la partie (44) en forme de paroi plane de la pièce de forme (42), il est prévu, s'engageant dans l'espace intérieur de cette portion (52) en forme de cylindre creux, plusieurs saillies (56), espacées suivant la direction périphérique et s'étendant approximativement jusqu'au capuchon extérieur (10), dont les flancs tournés l'un vers l'autre sont disposés radialement; et en ce que, sur la face postérieure du capuchon extérieur (10), il est prévu plusieurs saillies (58), s'étendant approximativement jusqu'à la partie (44), formant paroi plane, de la pièce de forme (42), lesquelles saillies, remplissent chacune l'intervalle existant, en direction périphérique, entre deux saillies (56), voisines, de la pièce de forme (42).

4. Bouchon de réservoir selon l'une quelconque des revendications 2 et 3, caractérisé en ce que, comme moyens de liaison, il est prévu un plateau à baïonnette (22) lequel se trouve dans la pièce (12) formant couvercle intérieur, est mis élastiquement en contrainte permanente en direction due capuchon extérieur (10) et, par ses deux extrémités libres (26), fait saillie radialement vers l'extérieur en passant par des ouvertures (28) prévues dans la paroi (14,16) de la pièce (12) formant couvercle intérieur; et en ce que la pièce de forme (42) assure une obturation, étanche aux liquides, de l'espace intérieur de la pièce (12) en forme de couvercle intérieur vis à vis du capuchon extérieur (10).

5. Bouchon de réservoir selon l'une quelconque des revendications 2 à 4, caractérisé en ce que le bord extérieur (48) de la collerette (18), en tôle métallique, de la pièce (12) formant couvercle intérieur est d'abord dirigé vers le capuchon extérieur (10) puis est rabattu radialement vers l'intériëur de façon à obtenir une section droite en U; et en ce que la pièce de forme (42) comporte, sur son extrémité postérieure écartée du capuchon extérieur (10), un bord (50), dirigé radialement vers l'extérieur et qui en fait tout le tour, dont la résistance mécanique est supérieure à celle des appendices (38) et à l'aide duquel elle est maintenue dans le bord rabattu (48) de la collerette (18).

6. Bouchon de réservoir selon la revendication 1, caractérisé en ce que le bord extérieur (48) de la collerette (18) de la pièce (12) formant couvercle intérieur, obtenue à partir d'une tôle métallique, est d'abord dirigé vers le capuchon extérieur (10) puis est rabattu radialement vers l'intérieur de façon à obtenir une section droite en U et en ce que le diamètre extérieur de la partie (64) constituant la paroi en forme de cylindre creux est égal au diamètre intérieur du bord extérieur rabattu (48); en ce qu'un appendice (66), dirigé vers l'extérieur et entourant sur la majeure partie de son pourtour, la partie (64) constituant la paroi en forme de cylindre creux, s'engage dans le bord extérieur rabattu (48); en ce que ce bord extérieur rabattu (48) présente un évidement (70) découpé, de faible largeur comparativement à la longueur de son périmètre; et en ce que la partie (64) du capuchon extérieur (10) qui constitue la paroi en forme de cylindre creux porte sur son pourtour extérieur un ergot (72), en saillie radialement vers l'extérieur, pénétrant dans cet évidement (70).

## Claims

1. Closure cap for fuel-tank necks of motor vehicles, with an outer cap (10) and an inner cap part (12) retained therein so as to preclude relative rotation, wherein the inner cap part (12) is cup-shaped, has a peripheral flange (18) on its side nearest the outer cap (10), carries sealing means to form a seal relative to the neck and comprises connecting means (22) to be fastened in the neck, wherein the outer cap (10) comprises on its rear side facing the inner cap part (12) an integrally moulded, plastics, hollow cylindrical wall part (36;64) open at its end nearest the inner cap part (12), which wall part has at its open end at least one radially directed projection (38;66) for connection with the inner cap part (12), and wherein the outer cap (10) can burst off from the inner cap part (12) when forces are exerted on the outer cap (10) in the event of a motor-vehicle accident, characterised in that the strength of the projection (38;66) is determined to be so low that it breaks off under the action of the forces acting on the outer cap (10) in the event of a motor-vehicle accident, and that positive coupling means (56,58;70,72) are provided for the connection precluding relative rotation between the outer cap (10) and the inner cap part (12).

2. A closure cap according to Claim 1, characterised in that the inner cap part (12) comprises on its side nearest the outer cap (10) a moulded part (42) having a generally flat wall part (44), that the moulded part (42) comprises a portion (52) projecting into the interior of the hollow cylindrical wall portion (36) of the outer cap (10) and also comprises a flange edge (54) projecting radially outwards at its free end, which flange edge engages behind the radially inward protruding projections (38) which are spaced apart from one another in peripheral direction, and that the mutually adjoining surfaces (40) of the projections (38) and of the flanged edge (54) lie in a plane perpendicular to the axis of the outer cap (10).

3. A closure cap according to Claim 2, characterised in that the portion (52) of the moulded part (42) projecting into the interior of the hollow cylindrical wall (36) of the outer cap (10) is of hollow cylindrical design, that on the flat wall part (44) of the moulded part (42) there is provided in the interior of this hollow cylindrical portion (52) a plurality of dogs (56) which are spaced apart in peripheral direction and which extend approximately as far as the outer cap (10), the mutually facing flanks of which dogs extend radially, and that on the rear side of the outer cap (10) there is provided a plurality of dogs (58) which extend approximately as far as the flat wall part (44) of the moulded part (42) and which respectively fill in pheripheral direction the interspace between two adjacent dogs (56) of the moulded part (42).

4. A closure cap according to Claim 2 or Claim 3, characterised in that as connecting means a bayonet fitting (22) is provided which lies within the inner cap part (12), is prestressed with spring resilience towards the outer cap (10) and with its free ends (26) protrudes radially outwards through apertures (28) provided in the walls (14,16) of the inner cap part (12), and that the moulded part (42) fluidtightly seals the interior of the inner cap part (12) relative to the outer cap (10).

5. A closure cap according to one of Claims 2 to 4, characterised in that the sheet-metal flange (18) of the inner cap part (12) is flanged over at its outer edge (48) towards the outer cap (10) and adjacent this is flanged radially inwards in U-shaped cross-section, and that the moulded part (42) has at its rear end remote from the outer cap (10) a peripheral, radially outward directed rim (50) of greater strength than the projections (38), with which rim it is retained in the flanged edge (48) of the flange (18).

6. A closure cap according to Claim ·1, characterised in that the flange (18) of the inner cap part (12) formed from sheet metal is flanged over at its outer edge (48) towards the outer cap (10) and adjacent this is flanged radially inwards in U-shaped cross-section, that the outer diameter of the hollow cylindrical wall part (64) is equal to the inner diameter of the flanged outer edge (48), that the outwardly directed projection (66), which encircles the hollow cylindrical wall part (64) over the majority of its circumference, engages into the flanged outer edge (48), that the flanged outer edge (48) has a cutaway recess (70) of short width in relation to the peripheral length, and that the hollow cylindrical wall part (64) of the outer cap (10) carries on its outer periphery a dog (72) projecting radially outwards into this recess (70).

FIG. 1

FIG. 2

FIG. 3

FIG. 4